Europäisches Patentamt

European Patent Office

Office européen des brevets

(19)

(11) Veröffentlichungsnummer: **0 026 729**

**A1**

(12) # EUROPÄISCHE PATENTANMELDUNG

(21) Anmeldenummer: **80710016.9**

(22) Anmeldetag: **29.05.80**

(51) Int. Cl.³: **B 27 B 15/08**

(30) Priorität: **13.09.79 DE 2937059**

(43) Veröffentlichungstag der Anmeldung:
**08.04.81 Patentblatt 81/14**

(84) Benannte Vertragsstaaten:
**AT BE CH DE FR GB IT LI LU NL SE**

(71) Anmelder: **Kreibaum Otto sen**
**Ortsteil Thüste**
**D-3216 Salzhemmendorf 7(DE)**

(72) Erfinder: **Kreibaum Otto sen**
**Ortsteil Thüste**
**D-3216 Salzhemmendorf 7(DE)**

(74) Vertreter: **Glawe, Richard, Dr. Dipl.-Ing. et al,**
**Glawe, Delfs, Moll & Partner Rothenbaumchaussee 58**
**D-2000 Hamburg 13(DE)**

(54) **Rundholzschneidevorrichtung.**

(57) Rundholzschneidevorrichtung mit Vorschubeinrichtungen für das Rundholz und mindestens einer quer zur Vorschubrichtung verstellbaren Bandsäge (7), die oberhalb und unterhalb des Sägebereichs Führungseinrichtungen (10,11) für das Sägeblatt aufweist. Um die Notwendigkeit einer Verschiebung des gesamten Sägegestells im Falle einer Querverschiebung des Sägeschnitts zu vermeiden, sind die Führungseinrichtungen (10,11) relativ zu dem Rollenpaar (4,5) verstellbar, über das jedes Sägeband läuft.

EP 0 026 729 A1

./...

Beschreibung        BEZEICHNUNG

siehe Titelseite

Die Erfindung bezieht sich auf eine Rundholzschneidevorrichtung mit Vorschubeinrichtungen für das Rundholz und
mindestens einer quer zur Vorschubrichtung verstellbaren
Bandsäge, die oberhalb und unterhalb des Sägebereichs Führungseinrichtungen für das Sägeblatt aufweist.

Es ist bekannt, für das Aufteilen von Rundholzquerschnitten
Bandsägen zu verwenden (Lueger: Lexikon der Technik, Bd. 8,
Seite 57 und 58). Dabei ist im allgemeinen die Bandsäge fest
stationär angeordnet, während zur Verstellung der Schnittebene im Verhältnis zum Rundholz die mit Führungseinrichtungen ausgestattete Vorschubeinrichtung quer zu der von
der Bandsäge stationär festgelegten Schnittebene verstellbar ist. Eine solche Verstellung ist nicht verwendbar, wenn
die Vorrichtung in einer Verarbeitungsstraße verwendet werden soll, die von den Rundhölzern längs einer bestimmten und
nicht veränderbaren Mittellinie durchlaufen werden soll. Ferner kann eine solche Verstellung nicht verwendet werden,
wenn mehrere Bandsägen zur Bearbeitung desselben Rundholzes
vorgesehen sind, bei denen der Abstand der Schnittebenen
voneinander veränderbar sein soll. In solchen Fällen ist man
bisher gezwungen, die Bandsägen als Maschineneinheit insgesamt quer verstellbar anzuordnen, was äußerst aufwendig ist.

Der Erfindung liegt die Aufgabe zugrunde, eine Vorrichtung
der eingangs genannten Art mit weniger aufwendiger Bandsägeverstellung zu schaffen.

Die erfindungsgemäße Lösung besteht darin, daß die Führungseinrichtungen, die in der Bandsäge zwischen den das Band umlenkenden Rollen zur Führung des Bandes im Schnittbereich vorgesehen sind, relativ zu den Rollen quer zur Vorschubrichtung
verstellbar sind.

...

Bisher hat man bei diesen Führungseinrichtungen darauf geachtet, daß sie genau mit der Ebene übereinstimmen, die von
dem Bandsägeblatt durchlaufen wird, wenn dieses frei zwischen
den Rollen gespannt ist. Daß man eine Querverstellung dieser
Einrichtungen früher noch nicht erwogen hat, mag mit dem Erfahrungssatz zusammenhängen, daß bei der Umlenkung der Sägeblätter der Umlenkdurchmesser mindestens um den Faktor 1000
größer sein muß als die Dicke des Blatts, weil sonst dessen
Dauerfestigkeit überschritten wird. Es liegt aber auf der
Hand, daß bei den Führungseinrichtungen ein solch großer
Durchmesser nicht eingehalten werden kann, weil die Führungseinrichtungen in dem beengten Raum zwischen den Rollen und
dem Schnittbereich der Blätter untergebracht werden müssen.
Demzufolge müssen die erfindungsgemäßen Führungseinrichtungen, die zweckmäßigerweise als Rollen ausgebildet sind, einen
wesentlich kleineren Umlenkdurchmesser haben. Die Erfindungshöhe beruht nun auf der überraschenden Feststellung, daß
trotzdem die Lebensdauer der Sägeblätter nicht meßbar beeinträchtigt wird. Dies ist möglicherweise dem Umstand zuzuschreiben, daß der Umlenkwinkel außerordentlich klein ist,
nämlich im allgemeinen unter 10 Grad und vorzugsweise unter
6 Grad. Besonders vorteilhaft ist ein Winkelbereich um 2-3
Grad. Da das Band zwischen den Hauptrollen der Bandsäge gespannt ist, folgt es wahrscheinlich im Umlenkbereich nicht
getreu der Umfangsform der Führungsrollen, sondern liegt daran
nur an, mit einem Krümmungsdurchmesser, der größer ist als
der Rollendurchmesser, so daß trotz der Verwendung von Umlenkeinrichtungen mit wesentlich kleinerem Krümmungsdurchmesser,
als es der zitierten Vorschrift entspricht, gleichwohl die
tatsächliche Beanspruchung des Bandes innerhalb der durch
jene Regel gegebenen Grenzen bleibt.

Ein Ausführungsbeispiel der Erfindung wird anhand der einzigen
Figur erläutert, die eine Ansicht in Richtung der Vorschubrichtung des zu verarbeitenden Rundholzes darstellt.

Zwei Bandsägen 1 und 2, die jeweils aus einem Gestell 3,
einer unteren Rolle 4, einer oberen Rolle 5, die mittels
eines Handrades 6 vertikal verstellbar ist, und dem Bandsägeblatt 7 besteht, sind einander gegenüberstehend an der
Verarbeitungsstraße angeordnet. Sie können mit dem Fundament
fest oder grob verstellbar verbunden sein. Das Sägeblatt 7
jeder Bandsäge durchläuft einen Sägebereich 8, in welchem
bei 9 zu bearbeitende Rundhölzer unterschiedlichen Durchmessers angeordnet sind. Der Sägebereich 8 wird oben und
unten jeweils durch eine Führungsrolle 10, 11 begrenzt, die
auf einem Balken 12 um zu den Drehachsen der Rollen 4 und 5
parallele Achsen frei drehbar gelagert sind. Sie befinden sich
in derselben Ebene wie die Rollen 4 und 5 und wirken daher
ebenfalls auf das Bandsägeblatt 7. Der Balken 12 ist parallel
zu sich selbst auf gestellfesten Führungsstangen 13, 14 verschiebbar, und zwar gemeinsam gegensinnig mit dem entsprechenden Balken der auf der anderen Seite angeordneten Führungsrollen mittels der Gewindespindel 15, 16 durch Betätigung des Handrads 17. Die beiden Spindeln sind zu gemeinsamer
Drehung durch eine Kette 18 verbunden, die die Kettenräder 19,20
umläuft. Die Führungsrollen 10, 11 befinden sich daher stets
genau vertikal übereinander und bestimmen daher auch eine vertikale Schnittebene des zugehörigen Sägeblatts. Sie sind ferner stets symmetrisch zu den Führungsrollen auf der anderen
Seite, wobei die Symmetrieebene vertikal durch die Mittelachse
der zu bearbeitenden Rundhölzer und durch die bei 21 angedeuteten Vorschubeinrichtungen geht, die aus einer Trag- und Vorschubkette und einer auf einem H-Träger angeordneten Führungsschiene für die Vorschubkette bestehen mögen.

Die Führungsstangen 13 und 14 sind über irgendwelche Zwischenglieder, die der näheren Beschreibung nicht bedürfen, starr
mit den Gestellen 3 der Bandsägen 1 und 2 verbunden und sichern
daher deren gegenseitigen Abstand.

...

Wünscht man eine Verstellung der Schnittebenen gegenüber der Rundholz-Mittelachse, so betätigt man das Handrad 17 und korrigiert die Bandspannung, die offensichtlich durch eine Lageveränderung der Führungsrollen beeinflußt wird, mittels der Handräder 6.

Die durch die Führungsrollen 10, 11 festgelegte Schnittebene befindet sich im allgemeinen weiter innen als die entsprechende Verbindungsebene der Hauptrollen 4 und 5, so daß das Sägeblatt durch seine Längsspannung gegen die Führungsrollen gedrückt wird.

GLAWE, DELFS, MOLL & PARTNER

Otto Kreibaum sen., 3216 Salzhemmendorf 7 (Ortsteil Thüste)

Rundholzschneidevorrichtung

PATENTANWÄLTE
ZUGELASSI NE VERTRETER BEIM EUROPÄISCHEN PATENTAMT

RICHARD GLAWE
DR.-ING

WALTER MOLL
DIPL.-PHYS DR. RER. NAT.
ÖFF. BEST. DOLMETSCHER

KLAUS DELFS
DIPL.-ING

ULRICH MENGDEHL
DIPL.-CHEM DR RER NAT

HEINRICH NIEBUHR
DIPL.-PHYS DR PHIL HABIL.

8000 MÜNCHEN 26
POSTFACH 37
LIEBHERRSTR. 20
TEL. (089) 22 65 48
TELEX 52 25 05 SPEZ

2000 HAMBURG 13
POSTFACH 25 70
ROTHENBAUM-
CHAUSSEE 58
TEL. (040) 4 10 20 08
TELEX 21 29 21 SPEZ

HAMBURG

11. September 1979
p 9668/80 EU
D/ad-ab

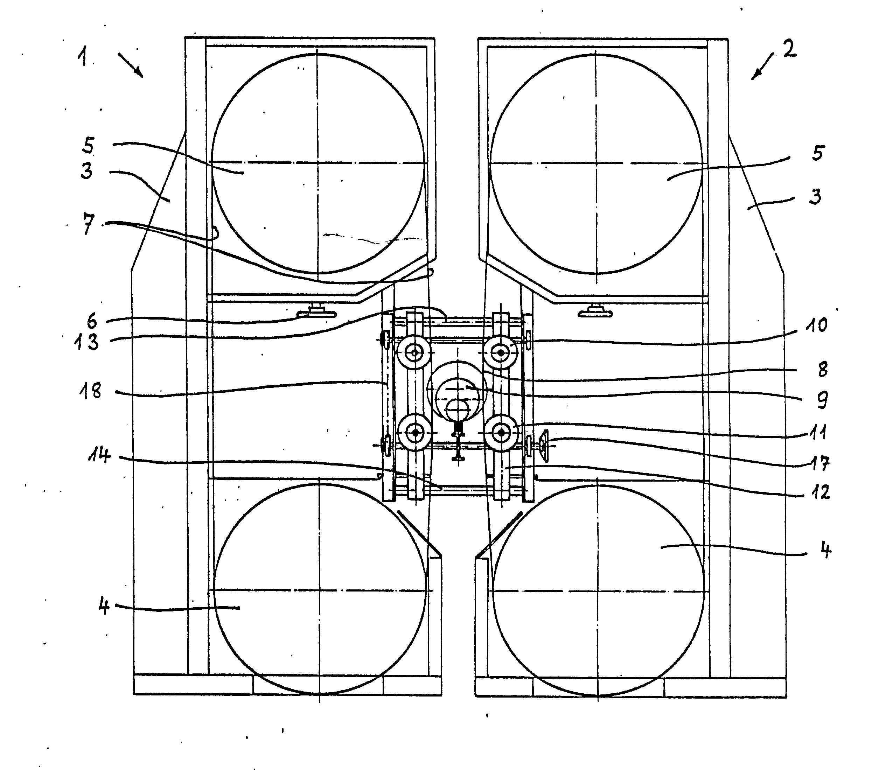

Patentansprüche

1. Rundholzschneidevorrichtung mit Vorschubeinrichtungen für das Rundholz und mindestens einer quer zur Vorschubrichtung verstellbaren Bandsäge, die oberhalb und unterhalb des Sägebereichs Führungseinrichtungen für das Sägeblatt aufweist, dadurch gekennzeichnet, daß die Führungseinrichtungen (10, 11) relativ zu den Rollen (4, 5) quer zur Vorschubrichtung verstellbar sind.

2. Rundholzschneidevorrichtung nach Anspruch 1, dadurch gekennzeichnet, daß die Führungseinrichtungen jeweils mindestens eine Führungsrolle (10, 11) aufweisen, die auf der Bandinnenseite angeordnet ist.

3. Rundholzschneidevorrichtung nach Anspruch 1 oder 2, dadurch gekennzeichnet, daß der Umlenkwinkel an jeder Führungseinrichtung nicht größer als 10 Grad, vorzugsweise nicht größer als 6 Grad ist.

. . .

Europäisches
Patentamt

**EUROPÄISCHER RECHERCHENBERICHT**

Nummer der Anmeldung

EP 80 71 0016.9

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - C - 96 798 (C. KLEEMANN)<br>* Seite 1; Fig. 1 *<br><br>-- | 1,2 |
|  | AT - B - 107 985 (L. GLASNER)<br>* Seiten 1, 2 *<br><br>-- | 1,2 |
|  | DE - U - 1 664 813 (E. SCHULTE, FURNIER-<br>UND SPERRHOLZWERKE)<br>* Anspruch 1; Fig. *<br><br>-- | 1,3 |
|  | DE - A1 - 2 634 986 (KOCKUMS AUTOMATION)<br>* Ansprüche 9, 10 *<br><br>-- | 1,3 |
|  | US - A - 2 743 745 (A.L. TEAGUE)<br>* Ansprüche 1 bis 10; Fig. 1, 6 *<br><br>---- | 1 |

**KLASSIFIKATION DER ANMELDUNG (Int.Cl.³)**

B 27 B 15/08

**RECHERCHIERTE SACHGEBIETE (Int. Cl.³)**

B 23 D 55/08

B 27 B 13/10

B 27 B 15/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

X Der vorliegende Recherchenbericht wurde für alle Patentansprüche erstellt.

| Recherchenort<br>Berlin | Abschlußdatum der Recherche<br>16-12-1980 | Prüfer<br>HOFFMANN |
|---|---|---|

EPA form 1503.1 06.78